# EUROPÄISCHE PATENTSCHRIFT

(11) **EP 3 846 629 B1**
(45) Veröffentlichungstag und Bekanntmachung des Hinweises auf die Patenterteilung: **11.03.2026**
(21) Anmeldenummer: 19758398.2
(22) Anmeldetag: 22.08.2019
(51) Int. Cl.: A21D 2/36

(54) **ENTKEIMUNG VON SPROSSEN/KEIMLINGEN UND VERWENDUNG EINES GEMISCHES AUS TEIG MIT ENTKEIMTEN SPROSSEN/KEIMLINGEN**
DEGERMINATION OF SPROUTS/GERM BUDS AND USE OF A MIXTURE OF DOUGH WITH DEGERMINATED SPROUTS/GERM BUDS
ASEPTISATION DES DRAGEONS/SEMIS ET UTILISATION D'UN MÉLANGE DE PÂTE COMPRENANT DES DRAGEONS/SEMIS ASEPTISÉS

(30) Priorität: 07.09.2018 DE 102018121896
(43) Veröffentlichungstag der Anmeldung: 14.07.2021
(73) Patentinhaber: Ernst Böcker GmbH & Co. KG, 32427 Minden (DE)
(72) Erfinder: BRANDT, Markus, 32423 Minden (DE); BÖCKER, Georg, 32427 Minden (DE); HAGMANN, Geert, 49088 Osnabrück (DE); BODE, Ralf, 32361 Preußisch Oldendorf (DE); SPILKER, Nicole, 32429 Minden (DE); STOLZ, Peter, 31675 Bückeburg (DE)
(74) Vertreter: Fleuchaus & Gallo Partnerschaft mbB
(86) Internationale Anmeldenummer: PCT/EP2019/072476
(87) Internationale Veröffentlichungsnummer: WO 2020/048784

(56) Entgegenhaltungen:
- DE-T2- 69 517 442
- RU-C1- 2 544 928
- DATABASE GNPD [online] MINTEL; 24 December 2012 (2012-12-24), ANONYMOUS: "Original Fruit Bread from the Tyrolean Mountains", XP055638061, retrieved from www.gnpd.com Database accession no. 1967240
- DATABASE GNPD [online] MINTEL; 29 November 2017 (2017-11-29), ANONYMOUS: "Orange Flavored Panettone", XP055638047, retrieved from www.gnpd.com Database accession no. 5275849
- DATABASE GNPD [online] MINTEL; 11 December 2015 (2015-12-11), ANONYMOUS: "Granola Biscuit with Cranberry & Sunflower Seeds", XP055638030, retrieved from www.gnpd.com Database accession no. 3644043

## Beschreibung

Die vorliegende Erfindung betrifft das Gebiet der Lebensmittelerzeugung, nämlich ein Verfahren zur Entkeimung von mit Mikroorganismen, insbesondere mit pathogenen Mikroorganismen (Erregern) belasteten Sprossen / Keimlingen geeignet für die Herstellung von Backwaren und/oder deren Vorprodukten, sowie deren Verwendung.

Der gesundheitsbewusste Verbraucher ist sich der Relevanz einer nährstoffreichen und ausgewogenen Ernährung zunehmend bewusst. Aufgrund der hohen Nährstoffdichte und des hohen Proteingehalts bei gleichzeitiger geringer Kaloriendichte sowie einem hohen Ballaststoffgehalt in gekeimtem Saatgut/ Samen essbarer Nutzpflanzen (Sprossen / Keimlinge) nimmt deren Beliebtheit stetig zu.

Die Vorteile des Verzehrs von gekeimten Samen als Nahrungs- und Heilmittel wurde schon vor ca. 5000 Jahren im ostasiatischen Raum erkannt, insbesondere in China. Mit der Ausbreitung der asiatischen Küche und Heilkunst wurden ab dem 18. Jahrhundert Sprossen / Keimlinge (auch unter der Bezeichnung Sprossen und Sprießkorn) aus Getreide, Leguminosen und Ölsaaten auch in der westlichen Hemisphäre bekannt. Erst seit relativ kurzer Zeit werden diese Sprossen / Keimlinge auch bei der gewerblichen Herstellung von Backwaren eingesetzt.

Unter "Entkeimung" im Sinne der vorliegenden Erfindung wird die durch eine entsprechende Behandlung bedingte Versetzung von Mikroorganismen in einen Zustand verstanden in denen die Mikroorganismen nicht mehr teilungs- und wachstumsfähig und/oder infektiös sind.

Die Begriffe "Samen, Saat oder Körner" werden im Sinne der vorliegenden Erfindung synonym verwendet.

Unter "Pflanzenkeime" auch kurz "Keime" genannt im Sinne der vorliegenden Erfindung werden alle aus der Befruchtung von pflanzlichen Eizellen entstandene Embryonen (Pflanzenkeime) mit Spross- und Blattkeim (Plumula) und Wurzelkeim (Radicula) verstanden.

Unter "Keimlinge" im Sinne der vorliegenden Erfindung werden alle Samen von der ersten Keimungsstufe an, dem sogenannten Quellkorn (wässrig gequellte Saat) verstanden, insbesondere alle Samen deren Pflanzenkeime sich in der aktiven Wachstumsphase befinden und bereits Wurzel- und Keimsprossen gebildet haben, die noch vom Nährgewebe des Samens (Endosperm) abhängig sind.

Unter "Sprossen" im Sinne der vorliegenden Erfindung werden alle aus den keimenden Samen herauswachsende bzw. bereits herausgewachsene, teilweise bereits mit Blättern besetzte Sprossachsen von Keimlingen verstanden.

Als Keimung bezeichnet man in der Botanik die erste Stufe der Ontogenese bei Samen. Die ernährungsphysiologischen positiven Nähr- und Vitalstoffe, die durch die Keimung einer Pflanze entstehen, haben diese Pflanzenkeimlinge / -sprossen in den letzten Jahren auch in den Fokus der gewerblichen Herstellung von Backwaren gerückt, in denen sie seitdem auch mehr und mehr eingesetzt werden.

Vor Beginn des Keimvorgangs befindet sich der Samen als Ausdauerorgan in der sogenannten Samenruhe (Ruhestadium) in der eine sehr schwache metabolische Aktivität charakteristisch ist. Unter Zufuhr von Sauerstoff, Wasser und geeigneter Keimtemperatur wird die Keimung eingeleitet. Zu Beginn des Keimvorgangs (Quellung) erhält das Getreide zunächst Zeit zum Quellen (Quellkorn); der Wassergehalt im Samen steigt auf ca. 70 % an und der im Ruhestadium befindliche Keim (Embryo) beginnt sich zu entwickeln. In dieser Phase wird der Metabolismus gesteigert und vielfältige biochemische Umwandlungsprozesse finden statt. So wird bspw. die feuchte Schale atmungsaktiv, sie springt auf und aus dem Pflanzenkeim wachsen zunächst Keimwürzelchen und aus der Keimblattscheide der Spross für die sich entwickelnde Pflanze. Durch Aktivierung vorhandener Enzyme und/oder deren Neusynthese kommt es zu einer Umwandlung von Pflanzenstoffen im Samen und zum partiellen Abbau der Sameninhaltsstoffe, so dass sie vom wachsenden Keimling zur Energiegewinnung genutzt werden können.

Während der Keimung laufen dabei verschiedene Ab-, Um- und Aufbauvorgänge ab. Mit dem gesteigerten Metabolismus während der Keimung ist auch eine gesteigerte Synthese von Nährstoffen verbunden, wie Vitaminen, insbesondere Vitamin C. Weiterhin tritt eine merkliche mengenmäßige Erhöhung der essenziellen Aminosäuren auf, insbesondere der Aminosäure Lysin. Die komplexe Stärke wird zu weniger komplexen Mehrfach- und Einfachzuckern abgebaut im Prozess der sogenannten Vorverdauung. Eine Erhöhung der essenziellen Fettsäuren sowie insgesamt eine Steigerung der Verdaubarkeit durch die Vorverdauung der pflanzlichen Inhaltsstoffe tritt somit im Vergleich mit der Ausgangssaat ein.

Über diesen erhöhten und leichter bekömmlichen Nährstoffgehalt von Sprossen / Keimlingen sind sich auch zunehmend die ernährungsbewussten Verbraucher im Klaren, was den Einsatz von Sprossen / Keimlingen für die Lebensmittelindustrie zunehmend interessant macht.

Haben die Sprossen etwa Kornlänge erreicht, können die Sprossen / Keimlinge geerntet bzw. einer weiteren Nutzung zugeführt werden. Bei zeitlich zu ausgedehnter Keimung, ist zu beachten, dass dies zu Vitaminverlusten und geschmacklichen Nachteilen führt, die es zu verhindern gilt.

Die zahlreichen biochemischen Vorgänge bei der Keimung bedingen eine Steigerung der Bekömmlichkeit der Sprossen / Keimlinge und führen zur Bildung verschiedener physiologisch wertvoller sekundärer Pflanzenstoffe. So wird im Verlauf des Keimprozesses ein signifikanter Anstieg der Vitamine B1, B2, B6, C, E, Biotin und Folsäure erzielt. Beim Backprozess bei dem es zu einem unvermeintlichen Verlust an allgemeinem Nährstoffgehalt kommt, kann man dennoch bei dessen Endprodukt, den Backwaren, durch Zugabe von Sprossen / Keimlingen noch einen deutlich höheren Vitamingehalt generieren und durch geeignete Messverfahren nachweisen als bei Backwaren, die mit ungekeimt eingesetzten Getreidekörnern derselben Getreidesorte produziert wurden.

Als Naturprodukt ist ein gewisses Keimspektrum mit Erregern normal und natürlich gegeben. Bei der Aufzucht von Sprossen / Keimlingen aus Saat hinsichtlich der Vorbelastung mit Erregern, wie Mikroorganismen, insbesondere von pathogenen Mikroorganismen ist jedoch besondere Sorgfalt und Aufmerksamkeit geboten. Eine natürliche Vorbelastung mit Erregern, insbesondere Mikroorganismen, wie z.B. Bakterien, die natürlicherweise ubiquitär vorkommen, kann insbesondere über die Luft, durch Regen oder durch Düngung mit Gülle, durch die Ernte selbst (bspw. durch verunreinigte Erntegeräte, Transportbehälter), durch die Trocknung auf Lagerflächen, durch die Bedingungen bei der Lagerhaltung, dem Transport und bei der menschlichen und maschinellen Verarbeitung erfolgen, z.B. durch Schmierinfektion.

Üblicherweise werden zur Desinfektion der Saatoberfläche oxidative Substanzen wie Wasserstoffperoxid (H₂O₂) oder Hypochlorid-Salze, wie Natriumhypochlorid (NaClO) genutzt und hierbei i.d.R. als wässrige Lösungen vor der Quellung der Saat appliziert. Die Exposition des Saatguts erfolgt in sterilen Gefäßen mit den oxidativen Substanzen mit entsprechender Einwirkdauer. Anschließend wird mehrmals mit sterilem Wasser nachgespült, ggf. mit Nach- oder Zwischenspülungen z.B. mit Alkohol. Ggf. wird dies im Stand der Technik unter dem Einfluss von Ultraschall zur mechanischen Reinigung des Saatguts durchgeführt.

H₂O₂-basierte Desinfektionsmittel werden häufig zur Verstärkung der Mikroorganismenabtöteten Wirkung Silberionen hinzugefügt, welche das Abwasser und damit die Umwelt dauerhaft belasten.

Nachteile der chlorbasierten Desinfektion ist u.a., dass ein Teil des Chlors organische Halogenverbindungen bildet, welche sich nur schwer abbauen lassen und demzufolge das Abwasser und somit die Umwelt zunehmend belasten.

Daneben gibt es in jüngster Zeit auch die Möglichkeit durch ein rein physikalisches Verfahren, welches die keimabtötende Wirkung von beschleunigten Elektronen nutzt, Saatgut zu desinfizieren, welches vom Fraunhofer-Institut für Organische Elektronik, Elektronenstrahl- und Plasmatechnik FEP entwickelt wurde. In Deutschland ist jedoch nach der Lebensmittelbestrahlungsverordnung vom 14. Dezember 2000 sowie den EU-Richtlinien 1999/2/EG und 1999/3/EG die Behandlung von Lebensmitteln, die nicht lediglich getrocknete aromatische Kräuter und Gewürze sind, mit beschleunigten Elektronen nicht gestattet.

Eine Gefahr besteht daher insbesondere bei der Keimung des Saatguts, die in der Regel ohne weitere Anwesenheit von Desinfektionsmittel auskommt. Aufgrund der bei der Keimung vorherrschenden feucht-warmen Bedingungen, welche für die Keimung der Getreidesaat essentiell sind, wächst die Gefahr einer Vermehrung von auch einem geringen Ausgangsbestand an pathogenen Mikroorganismen, insbesondere von Bakterien, Salmonellen, Schimmelpilze, Viren und Hefen, die unter solchen Keimungsbedingungen auch sehr gut wachsen, sich vermehren und sich verbreiten können.

Im Keimlingsbetrieb ist es üblich nach der Ernte der Sprossen / Keimlinge diese einem Waschprozess zu unterziehen, um sie vom restlichen anhaftenden Substrat zu reinigen und die oberflächliche Erregerlast zu reduzieren. Dem Waschwasser wird zusätzlich bspw. bei Mungo- oder Sojabohnensprossen / -keimlingen Zitronensäure beigefügt, um die Sprossen / Keimlinge für den Kunden ansprechend optisch aufzuhellen. Durch die Zitronensäure kommt es auch zu einer pH-Wert Absenkung in der Waschlösung, die eine Keimreduktion der mit ihr in Kontakt stehenden Sprossen / Keimlinge bedingt. Daran anschließend werden die Sprossen / Keimlinge von der Waschlösung befreit und im Kühlhaus bei maximal +6°C bis zur Weiterverarbeitung gelagert. Eine effektive vollständige Entfernung der Erreger oder eine Entkeimung des Entkeimungsguts, insbesondere von renitenten pathogenen Erregern, wie EHEC oder Salmonellen wird dabei aber nicht ausreichend gewährleistet.

Die Druckschrift WO 96/23528 beschreibt ein Verfahren zur oberflächlichen Desinfektion von - nicht als Dauerform (Saat) - vorliegenden Pflanzengut bzw. Pflanzengewebsgut, welches für eine vegetative Pflanzenvermehrung vorgesehen ist mittels kombinierter Behandlung der Pflanzengewebe mit Ultraschall in Anwesenheit einer wässrigen Lösung aus oxidativen Desinfektionsmittels, wie Natriumhypochlorid in dem sich das betreffende Pflanzengewebe befindet.

Aber auch bei ausreichender hygienischer Arbeitsweise bis zur Keimung der Getreidesaat stellt die mikrobiologische Hygiene und Haltbarkeit von Lebensmitteln, wie z.B. Backwaren, die Hersteller dieser Waren bei der Weiterverarbeitung vor erhebliche Probleme, zumal der Verbraucher den Einsatz von chemischen Desinfektionsmitteln des Saatguts vermeiden möchte.

Eine Kontamination mit Mikroorganismen, der in den Backwaren verarbeiteten Sprossen / Keimlingen, kann hierbei insbesondere während Ihrem Verpacken und Ihrem Transport erfolgen. Außer der Luft sind Geräte, Maschinen sowie Arbeitskräfte die wichtigsten potentiellen Überträger von Erregern auf die Sprossen / Keimlinge.

Tatsächlich gelten Sprossen seit einer großen Epidemie mit einem sogenannten Enterohämorrhagischen Escherichia coli (EHEC) Stamm, die 1996 in Japan auftrat als mögliche Überträger von pathogenen Keimen, wie EHEC.

Spätestens aber seit der großen hämolytisch-urämischen Syndrom (HUS)-Epidemie, die vornehmlich in Deutschland im Mai 2011 aber auch in anderen Teilen Europas auftrat, wobei Sprossen nach dem seinerzeitigen Bericht des Bundesinstituts für Risikobewertung (BfR), des Bundesamts für Verbraucherschutz und Lebensmittelsicherheit (BVL) und des Robert-Koch-Instituts (RKI) als mutmaßliche Träger des für den Menschen lebensgefährlichen Pathogens galten, gibt es große Verunsicherungen in der Bevölkerung hinsichtlich des sicheren Verzehrs von Sprossen / Keimlingen, insbesondere in Rohform. Seinerzeit erkrankten insgesamt 855 Menschen an HUS und 2.987 an Gastroenteritis, wobei 53 Menschen an der Infektion verstarben.

Als Ursache wurden sogenannte Enterohämorrhagische Escherichia coli (EHEC) angenommen, ein pathogener Stamm des natürlich vorkommenden Darmbakteriums *Escherichia coli* (*E.coli*).

*E. coli* gehört systematisch zur Familie der Enterobakterien, denen auch die "klassischen" Durchfallerreger, wie Salmonellen und Shigellen (Ruhrerreger), zugeordnet werden. Im Gegensatz zu den natürlichen nicht-pathogenen *E.coli* Stämmen, die im Darm wichtige ernährungsphysiologische Aufgaben bei der Nährstoffaufbereitung und als Teil der normalen Darmbiota bei der Abwehr von Krankheitserregern haben, sind EHEC-Stämme pathogene *E.coli* Stämme, charakterisiert durch die Bildung von Giften (Toxinen). Diese sogenannten Shiga- oder Verotoxine sind starke Zellgifte, die beim Menschen schwere Darmerkrankungen auslösen können, darunter HUS.

EHEC finden sich natürlicherweise im Darm von Wiederkäuern, bspw. Rindern, Ziegen oder Schafen und werden mit dem Exkrement der Tiere ausgeschieden. Über Schmierinfektion können Sie auf den Menschen direkt oder indirekt übertragen werden und lebensbedrohliche Krankheiten, wie die beschriebene HUS oder andere Erkrankungen des Gastrointestinalen Systems auslösen.

Weiterhin ist potentiell eine Salmonellen-Infektion durch mit Salmonellen belastete Sprossen / Keimlinge gegeben. Die Vergiftung mit Salmonellen, die sogenannte Salmonellose tritt i.d.R. endemisch auf und gehört neben den akuten Atemwegserkrankungen zu den häufigsten Infektionskrankheiten beim Menschen überhaupt. In den letzten Jahren konnten bspw. in Deutschland 90 % der lebensmittelbedingten Infektionen auf Salmonellen zurückgeführt werden. Insbesondere eine unzureichende Kühlung von Lebensmitteln fördert die Verbreitung der Salmonellen. Dies kann insbesondere im Sommer zu einer schnellen Vermehrung der Bakterien in Lebensmitteln führen bis eine kritische Infektionsdosis erreicht wird. Die Infektionsdosis ist dabei ein Maß, ab welcher Erregermenge eine Erkrankung möglich wird. Weiterhin ist die individuelle Empfindlichkeit der Verbraucher entscheidend für die Höhe der Infektionsdosis. Die Widerstandsfähigkeit von Salmonellen gegenüber schädigenden Umwelteinflüssen und ihre hohe Vermehrungsrate haben insgesamt dazu beigetragen, dass Salmonellenerkrankungen an erster Stelle der durch Lebensmittel übertragenen Krankheiten beim Menschen stehen.

Bemerkenswert ist, dass im Unterschied zu vielen anderen bakteriellen Infektionserkrankungen schon wenige Erreger (je nach Literaturquelle knapp unter bis knapp über 100 EHEC-Bakterien; Salmonellen: 10.000, in fetthaltgien Lebensmittel etwa 100) vor allem bei besonders empfänglichen Personen, wie Säuglingen, Kleinkindern und Älteren für eine krankheitsauslösende Infektion ausreichen, d.h. die Infektionsdosis bei EHEC aber auch bei Salmonellen ist vergleichsweise gering.

Durch Erhitzung bei einer Kerntemperatur von ca. 70°C des betreffenden Lebensmittels von ca. 2-10 Minuten werden pathogene Erreger, wie EHEC und Salmonellen abgetötet und etwaig vorhandene Toxine inaktiviert. Demgegenüber sind EHEC und Salmonellen bezüglich anderer Umwelteinflüsse, bspw. Kälte (selbst Tiefgefrieren), kurzzeitiger Ansäuerung (wie in der natürlichen Ansäuerung durch die Magensäure bei der Magenpassage von oral verzehrten Nahrungsmitteln beim Essvorgang des Menschen) oder Austrocknung relativ unempfindlich. Insofern sind Backwaren, welche Sprossen / Keimlinge enthalten, die mit pathogenen Erregern belastet sind vom infektiösen Standpunkt unbedenklich, da beim Backvorgang eine ausreichende Kerntemperatur in der notwendigen Zeitspanne erreicht wird. Gleichsam werden durch den Backvorgang mit ausreichend hoher und langer Kerntemperatur (wie oben beschrieben) eventuell bakteriell gebildete Toxine hitzeinaktiviert. Hier ist daher eher der mikrobielle Verderb entscheidend, der zu einer deutlichen Reduktion an Nähr-und Vitalstoffen in den von den Mikroorganismen befallenen Sprossen / Keimlingen führt und zudem von hygienischer Seite vom Verbraucher nicht gewünscht ist.

Etwas anderes gilt für den Einsatz von nicht gebackenen und nicht ausreichend durchgebackenen Backwaren oder Vorteigen und Sauerteigen, z.B. als Zusatz zu Müsli oder Cornflakes oder nicht bis zum Kern durchgebackenen Backwaren oder Topings.

Gleichsam und hoch problematisch können sich Hygieneprobleme, insbesondere durch Verschleppung von Schmierinfektionen ergeben bei gleichzeitigem Einsatz der mit Mikroorganismen belasteten Sprossen / Keimlinge in den Produktionsstätten von sogenannten Backwaren mit nicht gebackener Füllung, wie bspw. bei Puddingteilchen oder in Betriebstätten in denen Backwaren und Sahneprodukte, bspw. Windbeutel oder Sahnetorten fabriziert werden.

Dem ungeachtet gehören wie bereits angesprochen Sprossen / Keimlinge zu den leicht verderblichen Lebensmitteln, deren Herstellungsablauf die Möglichkeit eines schnellen mikrobiellen Verderbs und die Gefahr der Kontamination mit pathogenen Keimen, wie *E.coli,* Listerien, Salmonellen oder Viren, wie Noroviren oder Hepatitis A-Viren bedingt.

In fertig verpackten Sprossen, die mit Mikroorganismen belastet sind, besteht trotz i.d.R. kühler Lagerung die Möglichkeit, dass sich die Mikroorganismen in wenigen Tagen derart vermehren, dass die Sprossen / Keimlinge eine sehr hohe Keimbelastung aufweisen. Ist eine Kontamination mit pathogenen Erregern, wie EHEC oder Salmonellen, gegeben, besteht die gesteigerte Gefahr von schweren Erkrankungen für den Menschen, die tödlich verlaufen können.

Der Erfindung liegt vor diesem Hintergrund die Aufgabe zugrunde, die im Stand der Technik bekannten Nachteile der Verschleppung von Kontaminaten und/oder pathogenen Mikroorgansimen an zu verarbeitenden Pflanzenprodukten wenigstens teilweise zu überwinden. Insbesondere ist als ein Erfolg der Erfinder der vorliegenden Erfindung anzuerkennen, dass sie ein Verfahren zur Entkeimung von mit Mikroorganismen belasteten Sprossen / Keimlingen ohne den Einsatz von im Stand der Technik bekannten chemischen und/oder oxidativen Saat-/ Keimlings-Desinfektionsmitteln bereitstellen, damit solche Sprossen / Keimlinge eine hygienisch einwandfreie und definierte Qualität für die Herstellung und Weiterverarbeitung in Lebensmitteln und/oder Backwaren aufweisen. Das Dokument DE 69517442T2 offenbart ein Verfahren zur Fermentation von Getreidekeimen mit Milchsäurebakterien, welche im Anschluss für Backwaren genutzt werden.

Das erfindungsgemäße Verfahren zur Entkeimung von mit Mikroorganismen belasteten Sprossen / Keimlingen ist insbesondere geeignet für die Herstellung von Backwaren und/oder deren Vorprodukten, insbesondere Vorteige und/oder Sauerteige unter Verwendung von Wasser und wenigstens eines Getreidemahlproduktes, welches durch Zusatz von Milchsäurebakterien-enthaltenden und optional Hefe-enthaltenden Impfgutes angesäuert wird.

Das erfindungsgemäße Verfahren ist dabei durch die Merkmale des Anspruchs 1 gekennzeichnet.

Die Erfinder haben überraschenderweise herausgefunden, dass mit dem erfindungsgemäßen Verfahren eine effiziente Entkeimung der Sprossen / Keimlinge z.B. in Vorprodukten von Backwaren, insbesondere in Vorteigen und/oder Sauerteigen stattfindet und es nur einem groben Waschvorgang bedarf, um Substratreste von den einzusetzenden Sprossen / Keimlingen zu entfernen nicht aber einem extensiven Waschvorgang mit mehreren Waschrunden /-Schritten. Bei der Herstellung von Backwaren geht damit eine wesentliche Ausführungserleichterung und Qualitätssteigerung einher, weil das Entkeimungsverfahren direkt in den Vorprodukten von Backwaren, insbesondere in Vorteigen und/oder Sauerteigen stattfindet. Eine Rekontamination ist damit im Wesentlichen ausgeschlossen und zusätzlich wird Prozess- und Reinigungswasser mit den entsprechenden Zusätzen eingespart und somit Energie gespart und das Abwasser und die Umwelt geschont.

Gemäß der Erfindung besteht das im Verfahren eingesetzte Impfgut aus Milchsäurebakterien und/oder weiteren Mikroorganismen, oder kann ein Sauerteigstarter und/oder fertiger Sauerteig sein. Der Sauerteig dient damit als Entkeimungsmedium, in dem pathogene Mikroorganismen verdrängt, überwachsen oder durch Ansäuerung inaktiviert werden. Im Weiteren wir der allgemeine Begriff "Teig" synonym für Sauerteig, Sauerteigstarter, Sauerteig-haltige Gemische aus Getreideprodukten und Wasser verwendet.

Nach der erfolgten erfindungsgemäßen Entkeimung kann das entstandene angesäuerte Gemisch, direkt als Teig mit entkeimten Sprossen / Keimlingen gebacken werden. Dies bedingt eine Ausführungsvereinfachung des Herstellungsverfahrens von Backwaren enthaltend entkeimte Sprossen / Keimlinge.

Insbesondere zeichnet sich das erfindungsgemäß entkeimte Gemisch dadurch aus, dass dieses Gemisch, in anderen Worten, der Teig mit Sprossen / Keimlingen in pastöser Form vorliegt und durch den Einsatz der nachfolgend beschriebenen Hydrokolloide vorteilhaft verbessert wurde.

Durch den Einsatz des mindestens einen gelbildenden Hydrokolloids in einem bestimmten Verhältnis zu den restlichen Komponenten werden die Fließeigenschaften der Mischung und gleichzeitig eine Gleichverteilung der Sprossen / Keimlinge im Teig wesentlich bestimmt.

Es hat sich gezeigt, dass insbesondere im pastösen Gemisch, die Gleichverteilung der Sprossen / Keimlinge und gleichzeitig die Gleichverteilung der zugesetzten Milchsäurebakterien und/oder weiterer Mikroorganismen ermöglicht, wobei eine deutlich verbesserte Entkeimung erreicht wird, da es keine "Toträume", in denen die Milchsäurebakterien nicht oder unzureichend aktiv sind, z.B. durch Zusammenlagerung von Sprossen / Keimlingen, gibt.

Ein weiter Vorteil ist, dass dieser Teig mit Sprossen / Keimlingen pumpbar bleibt, und es gewährleistet ist, dass eine stabile Gleichverteilung der Sprossen / Keimlinge im Teig auch nach Lagerung, Transport erhalten bleibt. Gemäß der vorliegenden Erfindung beinhaltet der Begriff "pumpbar", dass der Teig mit Sprossen / Keimlingen immer noch fließfähig ist, und damit potentiell derart zähfließend ist, dass das Risiko eines Absinkens und damit der Verlust einer Gleichverteilung der enthaltenen Sprossen / Keimlinge bestände. Dies ist aus Sicht des Kunden insbesondere für eine gleichbleibende Konsistenz und Qualität des Teiges entscheidend. Auch ist damit bei den weiterverarbeitenden Betrieben gewährleistet, dass unter Anlegung einer niedrigen gleichbleibenden Pumpleistung der Teig abgepumpt werden kann. Dies ist bei einem Teig mit nicht dauerhaft gleichverteilten Sprossen / Keimlingen, die im Zuge der Lagerung bzw. des Transportes durch die Schwerkraft bedingt zum Boden des Teiggefäßes hin absinken und dort akkumulieren etwaig nicht der Fall, da eine höhere Pumpleistung von Nöten wäre, um die höher konsistente Teigfraktion am Boden des Teiggefäßes mitabzupumpen, welche durch die höhere Anzahl/Dichte an akkumulierten Sprossen / Keimlingen im Teig am Boden des Teiggefäßes bedingt ist.

Gemäß einer Ausführungsform sind die erfindungsgemäßen Sprossen / Keimlinge aus gemälzter Saat und/oder Blattkeimen / Wurzelkeimen aus Saat erhältlich, wobei die gemälzte Saat und/oder Blattkeime / Wurzelkeime nach der Keimung getrennt und getrocknet werden.

"Gemälzte Saat" im Sinne der vorliegenden Erfindung ist Saat, die bereits angekeimt ist, aber noch gewisse Saatreservestoffe hat.

Mittels der Trennung der gemälzten Saat und der Blatt-/ Wurzelkeime voneinander und der anschließenden separaten Trocknung erhalten die erfindungsmäßen Sprossen / Keimlinge eine besonders erhöhte Qualität.

Bei den erfinderisch einzusetzenden Sorten der Sprossen / Keimlinge handelt es sich um Weizen, Dinkel, Roggen, Gerste, Hafer, Reis, Hirse, Quinoa, Salate, Zwiebel(samen), Kichererbsen, Linsen, Lauch, Anis, Kümmel, Fenchel, Bockshornklee, Mais, Bohnen, Erbsen, Sojabohnen, Luzerne, Radieschen, Rettich, Kresse, Kapuzinerkresse, Chia, Brokkoli, Rucola, Alfa-alfa, Amaranth, Kürbis, Senf, Sesam, Leinsaat, Sonnenblume und Tomaten oder Mischungen aus den vorgenannten. Das zugesetzte, zumindest eine gelbildende Hydrokolloid ist vorzugsweise ein Hydrokolloid ausgewählt aus der Gruppe von Xanthan, Alginat, Carrageen, Hydroypropylmethylcellulose, Inulin und hochverestertes Pektin oder Mischungen von den vorgenannten. Erfindungsgemäße gelbildende Hydrokolloide zeichnen sich dadurch aus, dass sie im Kühlen Gele bilden ohne einen Hitze-vermittelten Aktivierungsschritt.

Nach einer bevorzugten Ausführungsform ist das nicht-hitzeresistentes Hydrokolloid, ein Pektin und/oder Inulin oder Mischungen hieraus.

Dabei kann es angebracht sein zusätzlich zu den erfindungsgemäßen gelbildenden Hydrokolloiden Verdicker, wie bspw. Stärke, Guarkernmehl oder Johannisbrotkernmehl einzusetzen.

Durch die vorteilhaften und modulierbaren Fließeigenschaften der mittels gelbildenden Hydrokolloids eingestellten Mischung ist es außerdem gemäß einer weiteren Ausführungsform auch möglich geworden diese Mischung durch Besprühen auf die Sprossen / Keimlinge zu applizieren. Es hat sich herausgestellt, dass damit eine feinere Verteilung des Gemisches aus Milchsäurebakterien und/oder weiterer Mikroorganismen auf den Sprossen / Keimlingen möglich ist. Gleichzeitig zeigte sich dass diese feine Verteilung zu einer voll umschließenden Schicht wird, die ebenfalls eine entsprechend vorteilhafte verbesserte entkeimende Wirkung zeigt.

Die vorteilhaften und modulierbaren Fließeigenschaften des erfindungsgemäßen pastösen pumpbaren Teiges (Entkeimungsgemisch) werden über ein bestimmtes Verhältnis von dem zumindest einem gelbildenden Hydrokolloid zu der Gesamtmasse des pastösen Teiges (im Wesentlichen dem Gemisch aus Wasser, Getreidemahlprodukt und Impfgut) eingestellt.

Gemäß einer weiteren Ausführungsform, wobei das zumindest eine gelbildende Hydrokolloid ausgewählt aus der Gruppe von Xanthan, Alginat, Carrageen, Hydroxypropylmethylcellulose und verestertes Pektin, d.h. heißt mit einem Veresterungsgrad > 50 % oder Mischungen von den vorgenannten ist wird das gelbildende Hydrokolloid in dem bestimmten Verhältnis von ca. 0,2 - ca. 5 %, bevorzugt von ca. 0,5 - ca. 3 % und besonders bevorzugt von ca. 0,6 - ca. 2 % bezogen auf die Gesamtmasse des pastösen Teiges eingesetzt.

Gemäß einer bevorzugten Ausführungsform ist das erfindungsgemäße gelbildende Hydrokolloid Inulin und das bestimmte Verhältnis von Inulin zur Gesamtmasse des pastösen Teiges ist ca. 2 - ca. 12 %, bevorzugt ca. 4 - ca. 10 % und besonders bevorzugt ca. 5,3 - ca. 8,7 %.

Das Inkubieren des Gemisches aus Teig und Sprossen / Keimlingen dauert insgesamt ca. 1 - ca. 10 Tage, vorzugsweise ca. 2 - ca. 8 Tage und besonders bevorzugt ca. 3 - ca. 5 Tage oder ca. 2 - ca. 3 Tage. Das Entkeimen geschieht bei einem erreichten Ansäuerungs-pH von ≤ ca. 4.3, vorzugsweise von ca. pH 3.0 - ca. 4.5 und besonders bevorzugt von ca. pH < 4.2 und einer Temperatur von ca. 12 - ca. 30°C, vorzugsweise von ca. 15 - ca. 25 °C und besonders bevorzugt von ca. 18 - ca. 22°C.

Gemäß der Erfindung wird die Entkeimung des Gemisches, der mit Mikroorganismen belasteten Sprossen / Keimlinge, ohne Hinzufügen von zusätzlichen Ansäuerungsmitteln, wie Milchsäure, Essigsäure, Zitronensäure oder anderen organischen oder mineralischen Säuren erreicht.

Das erfindungsgemäße Impfgut enthält dabei eine adaptierte Mischflora aus wenigstens einem Stamm homo- und/oder heterofermentativer Milchsäurebakterien, wobei der Stamm homo- und heterofermentativer Milchsäurebakterien ausgewählt ist aus den Stämmen *L. acidifarinae, L. acidophilus, L. alimentarius, L. amylovorus, L. brevis, L. buchneri, L. cellobiosus, L. coleohominis, L. collinoides, L. crispatus, L. crustorum, L. curvatus, L. delbrueckki, L. diolivorans, L. farciminis, L. fermentum, L. fructivorans, L. frumenti, L. gallinarum, L. gasseri, L. hammesii, L. helveticus, L. hilgardii, L. homohiocchi, L. johnsonii, L. kefiri, L. kimchi, L. kunkeei, L. linderi, L. mali, L. mindensis, L. mucosae, L. nagelii, L. nantensis, L. namurensis, L. nodensis, L. oris, L. panis, L. paralimentarius, L. parabuchneri, L. paracasei, L. pentosus, L. perolens, L. plantarum, L. pontis, L. reuteri, L. rossiae, L. sakei, L. sanfranciscensis, L. secaliphilus, L. siliginis, L. spicheri, L. vaginalis, L. zymae, u.a. Lactococcus lactis, Leuconostoc citreum, Lc. argentinum, Lc. suntoryeus, L. gelidum, Lc. mesenteroides, Pediococcus acidilactici, P. damnosus, P. parvulus, P. pentosaceus, Weissella cibaria, Weissella confusa, Weissella kandleri, Weissella paramesenteroides, Weissella viridescens* und Mischungen derselben.

Gemäß eines Beispiels wird die Mischung mit einer Sauerteig Starterkultur versetzt, die vorzugsweise - jedoch nicht ausschließlich - Lactobacillen ausgewählt aus der Gruppe *Lactobacillus plantarum, L.fermentum, L.paracasei, L.paralimentarius, L.helveticus, Leuconostoc argentinum* und *Saccharomyces pastorianus* enthält.

Die Milchsäurebakterien müssen hierbei geeignet sein, den notwendigen niedrigen pH für eine Entkeimung zu generieren. Geeignete Milchsäurebakterien sind dem Fachmann bekannt und sind hierbei im Sinne der Erfindung miteingeschlossen.

Optional kann das erfindungsgemäße Impfgut zusätzlich wenigstens einen säuretoleranten Hefestamm enthalten.

Der wenigstens eine Hefestamm muss hierbei geeignet sein, den notwendigen niedrigen pH für eine Entkeimung zu ertragen. Geeignete Hefestämme sind dem Fachmann bekannt und sind hierbei im Sinne der Erfindung miteingeschlossen. Insbesondere ist ein Hefestamm ausgewählt aus den Stämmen *Candida milleri (Kazachstania milleri), Candida humilis, Kazachstania exigua, Saccharomyces cerevisiae, Debaryomyces hansenii, Dekkera bruxellensis, Kazachstania unispora, Kluyveromyces lactis, S. bayanus, Saccharomyces pastorianus, Torulaspora delbrueckii, T. pretoriensis, Wickerhamomyces anomalus, Pichia anomala, Hansenula anomala, Pichia kudriavzevii, Issatschenkia orientalis, Candida krusei* und Mischungen derselben.

Nach einer Ausführungsform des erfindungsgemäßen Verfahrens wird durch das Verfahren insgesamt ca. 98% der pathogenen, die Sprossen / Keimlinge belastenden, Mikroorganismen abgetötet. Völlig ausreichend - und in jedem Fall erreichbar durch den Einsatz der vorliegenden Erfindung - ist eine Reduktion, Inaktivierung und/oder Abtötung der pathogenen, die Sprossen / Keimlinge belastende, Mikroorganismen von 99%, weiterhin von 95%, 90%, 85%, 80%, 75% der Mikroorganismen auf den belasteten Sprossen / Keimlingen, insbesondere der Mikroorganismen der *E. coli* Stämme EHEC und / oder Salmonellen. Insbesondere wird durch das erfindungsgemäße Verfahren eine Dezimierung der jeweiligen pathogenen Mikroorganismen auf Werte unterhalb der jeweiligen kritischen Infektionsdosis für den Menschen angestrebt und erreicht.

Bereits nach eintägiger Exposition im erfindungsgemäßen Sauerteigansatz wird die Lebendzahl der Mikroorganismen, welche die Sprossen / Keimlinge belasten, insbesondere der Mikroorganismen der *E. coli* Stämme EHEC und / oder Salmonellen um ca. 3 log-Stufen reduziert, insbesondere auf ca. 0,2% der Initialzahl zum Zeitpunkt Tag 0 reduziert, d.h. mehr als ca. 99,8 % der Ausgangsanzahl der Mikroorganismen wird eliminiert.

Das erfindungsgemäße Verfahren kommt dabei insbesondere ohne Applikation von Hitze zur Inaktivierung der unerwünschten Mikroorganismen, insbesondere ohne einen Pasteurisierungsschritt aus. Damit bleiben die Milchsäurebakterien des Impfguts lebendig und andauernd aktiv. Erst im längeren, und über mehrere Tage andauernden Entkeimungsprozess kann die Mischflora durch den niedrigen pH selbst inaktiviert bzw. abgetötet werden.

Beschrieben werden auch die nach dem erfindungsgemäßen Verfahren entkeimten Sprossen / Keimlinge. Ihnen kommt die erforderliche hygienisch einwandfreie Qualität zu, die für den Einsatz z.B. in Backwaren erforderlich ist.

Es ist gemäß der Beschreibung auch möglich ungetrocknete Sprossen / Keimlinge, d.h. frische oder rohe Sprossen / Keimlinge mittels des erfindungsgemäßen Verfahrens zu entkeimen und diese dann weiter zum Beispiel für das Backen oder für den Rohverzehr zu verarbeiten. Dies ist insbesondere vorteilhaft, da mit den im Stand der Technik zur Verfügung stehenden Entkeimungsverfahren frische Rohsprossen / -keimlinge derzeit nicht hinreichend hygienisch einwandfrei zu entkeimen sind.

Besonders bevorzugt wird auch zur Entkeimung von Sprossen / Keimlingen für den Rohverzehr der Einsatz des erfindungsgemäßen Verfahrens z.B. mittels Besprühen vorgeschlagen. Die fertig entkeimten Sprossen / Keimlingen können für den Rohverzehr gewaschen werden.

Weiterhin ist Gegenstand der vorliegenden Erfindung die Verwendung eines angesäuerten Gemisches aus Teig mit entkeimten Sprossen / Keimlingen hergestellt nach dem erfindungsgemäßen Verfahren zum Herstellen von Backwaren.

Backwaren hergestellt aus einem angesäuerten Gemisch aus Teig mit entkeimten Sprossen / Keimlingen sind ebenfalls Teil der Beschreibung.

### Verzeichnis der Figuren:

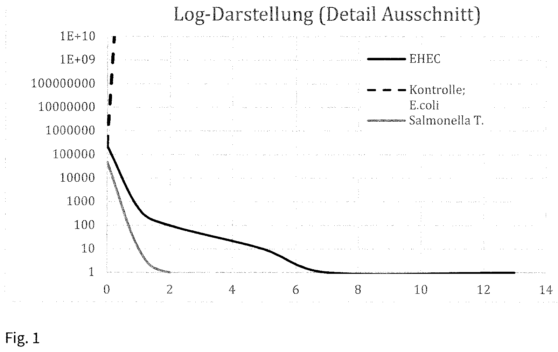

**Figur 1****:** Signifikante Reduktion der Lebendkeimzahl von EHEC und Salmonellen im erfindungsgemäßen Sauerteiggemisch aus Sauerteig (40 %), Inulin (8 %) und Sprossen / Keimlinge (52 %) während der Inkubation zu unterschiedlichen Zeiten nach Herstellung des Sauerteiggemisches (Wachstumskurve); (schwarze durchgängige Linie) erfindungsgemäßer EHEC-Ansatz; (dunkelgraue durchgängige Linie) *erfindungsgemäßer Salmonella typhimurium -* Ansatz; (hellgrau gestrichelte Linie) Kontroll-Ansatz *(E.coli,* kultiviert unter Standard-Idealbedingungen; rechnerische Literaturwerte). Messwerte nach Tabelle 1; x-Achse: Tage nach Ansetzung des Sauerteigansatzes, y-Achse: Lebendkeimzahl [Koloniebildende Einheit (KBE)/ g], log-Darstellung

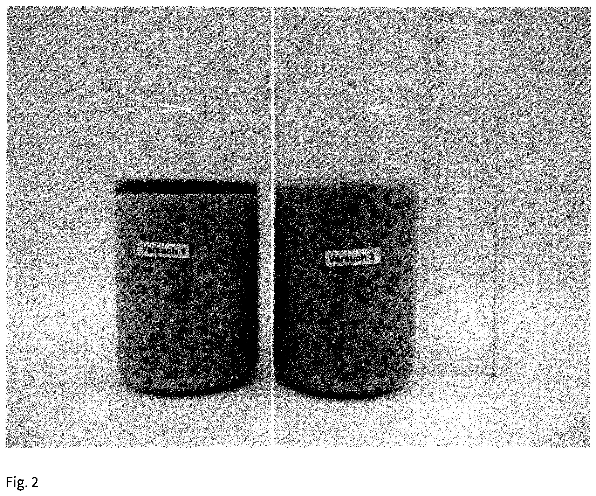

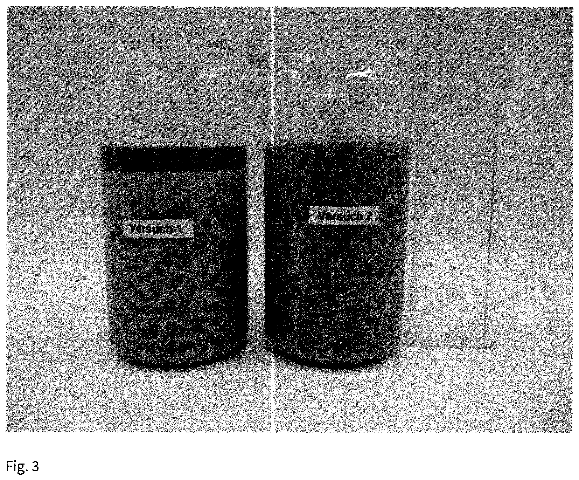

**Figur 2** **und** **3****:** Fotografischer Vergleich der Veränderung der Gleichverteilung von im Sauerteiggemisch vermengten Sprossen / Keimlingen und zudem der Retention von Wasser während des Ruhens/Lagerung der erfindungsgemäßen Rezeptur (mit "Versuch 2" indiziert; rechte Fotografiehälfte) im Vergleich zu einer Stand der Technik Rezeptur (Kontrolle, mit "Versuch 1" indiziert; linke Fotografiehälfte)

### Beispiele

### Beispiel 1: Herstellung des erfindungsgemäßen Ansatzes aus Sauerteig mit Inulin und mit EHEC oder Salmonellen belasteten Getreidesprossen/Getreidekeimlingen

Für den Sauerteigansatz wurden Getreidemahlerzeugnisse und Wasser im Mischungsverhältnis 1:1 zusammen mit dem Impfgut zu einer teigartigen Masse (Sauerteig) verarbeitet. Die Dosierung des Impfguts lag bei 10% bezogen auf die Menge der Getreidemahlerzeugnisse. Anschließend erfolgte die Fermentation bei 26-28 °C über ca. 24 Stunden.

Als nächstes wurde zum Sauerteig eine Inulinzusammensetzung mit 8% Inulin zugegeben. Direkt im Anschluss erfolgten die Zugabe der Getreidesprossen/Getreidekeimlinge (Weizen) sowie die homogene Vermengung dieser im Sauerteig.

Die hergestellte Mischung aus Sauerteig, Hydrokolloid (Inulin) und Getreidesprossen / Getreidekeimlinge wurde unter intervallweisem Rühren weiter inkubiert und zu einer pumpbaren Endkonsistenz eingestellt.

Die beispielhafte Rezeptur ist:
Sauerteig : 40 %
Inulin : 8 %
Sprossen / Keimlinge : 52 %

### Beispiel 2

### Signifikante Reduktion der Lebendkeimzahl von EHEC und Salmonellen

Das Procedere zur Bestimmung des Einflusses des erfindungsgemäßen Sauerteigansatzes (s.o.) auf die Lebendkeimzahl von mit EHEC bzw. Salmonellen vorbelasteten Getreidesprossen /keimlingen war, wie folgt: Zunächst wurden vorgereinigte Weizenkörner für 12 Stunden in Trinkwasser bei 18 °C eingeweicht. Anschließend wurde überschüssiges Wasser entfernt und die Keimung bei ca. 20 °C durchgeführt. Bei Bedarf wurde Wasser nachdosiert. Nach 3 Tagen wurden die Keimlinge / Sprossen in eine Suspension von *E. coli* O157:H7 überführt, damit eine Zellzahl von 10⁵ koloniebildende Einheiten (KBE) / g erreicht werden konnte. Ein entsprechender Ansatz wurde statt mit *Escherichia coli* O157:H7 mit einem *Salmonella-Stamm (Salmonella typhimurium)* durchgeführt. Anschließend wurden Keimlinge / Sprossen und Sauerteig (Teigausbeute 200) im Verhältnis 1:1 vermischt und in einzelne Portionen (50 g Einheiten) aufgeteilt und in Polyethylenbeutel verpackt. Zu Beginn des Versuchs (0 Tage) und zu verschiedenen späteren Zeitpunkten wurden Lebendkeimzahlbestimmungen im Spatelverfahren durchgeführt. *E. coli* O157:H7 wurden auf Sorbit-McConkey (SMAC)-Agar wachsen gelassen und die Anzahl der KBE / g erfasst, *Salmonella typhimurium* entsprechend auf XLD-Agar.

Für sehr geringe Keimzahlen wurde eine Anreicherung von EHEC/Salmonella durchgeführt um auch geschädigte Zellen zu erfassen.

Zu Beginn (Tag 0) des Versuches war die gemessene initiale Ausgangszahl von *E. coli* O157:H7 2,5 * 10⁵ KBE / g. Diese Anzahl wurde nach Inkubation für einen Tag in dem erfindungsgemäßen Sauerteig nach obiger Rezeptur signifikant auf 5,0 * 10² KBE (Tag 1) und nach 2 Tagen auf 1,0 * 10² KBE /g (Tag 2) reduziert (siehe Figur 1, Tabelle 1). Nach 5 Tagen wurden die EHEC-Bakterien im Ansatz nahezu vollständig auf 5,0 * 10¹ KBE / g (Tag 5) reduziert. Nach 7 Tagen Inkubation waren nur noch knapp über 1,0 * 10¹ KBE / g (Tag 7) nachweisbar. Nach 13-tägiger Inkubation (Tag 13) wurde die letzte Messung getätigt. Hier konnte keine EHEC-Anreicherung mehr detektiert werden. Abgeleitet aus der Wachstumskurve (Figur 1) ist aber zu erkennen, dass bereits bei einer Inkubation von weniger als 7 Tagen alle lebenden EHEC-Erreger auf nicht nachweisbare Mengen dezimiert, d.h. komplett eliminiert wurden und auch nach einer Anreicherung nicht mehr nachgewiesen werden konnten.

Aus den Ergebnissen ist abzuleiten, dass bereits nach eintägiger Exposition im erfindungsgemäßen Sauerteigansatz (Tag 1) die EHEC Lebendzahl um ca. 3 log-Stufen auf ca. 0,2% der Initialzahl zum Zeitpunkt Tag 0 reduziert wurde, d.h. mehr als ca. 99,8 % der Ausgangsanzahl der EHEC-Mikroorganismen eliminiert wurde. Wie bereits oben beschrieben liegt die Infektionsdosis bei EHEC je nach Quelle bei knapp unter 100 bis knapp über 100 EHEC-Erregern, um eine krankheitsauslösende Infektion zu bedingen. Nach zweitägiger Inkubation gemäß dem erfindungsgemäßen Verfahren wurden die EHEC-Erreger auf eine Gesamtzahl von ca. 100 (1,0 * 10²) Bakterien reduziert, d.h. sehr vorteilhaft ggf. unter bzw. nahe der kritischen Infektionsdosisschwelle.

Dies ist umso erstaunlicher, da aus der Literatur bekannt ist, dass die Anzahl von *E. coli* unter Standard-Idealbedingungen exponentiell anwächst: Nach Literaturangaben beträgt die Generationszeit von *E.coli,* auch von EHEC, unter optimalen Inkubationsbedingungen ca. 20 min., d.h. ein EHEC-Bakterium teilt sich bei optimalen Bedingungen alle 20 Minuten. Bei einer Ausgangsanzahl von 2,5 * 10⁵ KBE / g wäre dies nach einen Tag rechnerisch bereits ca. 1,18059E+27 KBE / g, nach zwei Tagen 5,57519E+48 KBE / g usw. (siehe Figur 1), dies ist allerdings nur ein theoretischer Wert, da nun mal nicht mehr als maximal 10¹³ Zellen in 1 g passen. Das erfindungsgemäße Verfahren unter Verwendung der erfindungsgemäßen Zusammensetzung stoppt nicht nur diesen fatalen exponentiellen "Wachstumsboom" der pathogenen Mikroorganismen, sondern reduziert ihre Anzahl signifikant und vorteilhaft in relativ kurzer Zeit auf sehr niedrige Werte bezogen auf ihre initiale Anzahl bis hin zu einer Anzahl unterhalb der kritischen Infektionsdosis und weiter darunter.

Der parallele Ansatz bei dem in dem erfindungsgemäßen Sauerteig-Ansatz statt *E. coli* O157:H7 *Salmonella typhimurium* eingesetzt wurde, ergab zu Beginn des Versuchs (Tag 0) eine initiale Anzahl an *Salmonella typhimurium* von 5,0 * 10⁴ KBE. Die in der Literatur beschriebene Infektionsdosis liegt bei Salmonellen bei ca. 10.000 Bakterien, die initiale Bakterienanzahl lag ergo ca. bei dem fünffachen Wert der Infektionsdosis. Nach einer entsprechenden Inkubation des Ansatzes für 1 Tag wurde die Anzahl KBE / g Ωbereits um mehr als 3 log-Stufen auf < 1,0 * 10¹ KBE/g (Tag 1) reduziert, ergo deutlich unter dem Wert der Infektionsdosis. Nach 2 Tagen konnte *S. typhimurium* nur noch nach einer Anreicherung detektiert werden (Tag 2, nachweisbar aber nicht zählbar), nach 5 Tagen (Tag 5) war die Anreicherung negativ (siehe Tabelle 1). D.h. es ist davon auszugehen, dass spätestens zum Tag 5 alle initial vorhandenen Salmonellen durch die Inkubation in dem erfindungsgemäßen Sauerteigansatz abgetötet wurden. Dies stellt einen sehr vielversprechenden positiven Befund im Hinblick auf hygienisch einwandfreie Sprossen / Keimlinge, insbesondere für die Lebensmittelindustrie dar.

Ohne an die Theorie gebunden zu sein, wird angenommen, dass der Unterschied zwischen dem Resultat bei dem verwendeten Salmonellen-Stamm und dem EHEC-Stamm auf eine allgemein bekannte höheren Säuretoleranz von EHEC-Erregern im Vergleich zu Salmonellen trotz gleicher Behandlung zurückgeführt werden kann.

Dem ungeachtet haben die Erfinder der vorliegenden Erfindung überraschend und bemerkenswerterweise herausgefunden, dass der allgemein recht säureresistente Salmonella-Stamm *Salmonella typhimurium* und der sehr säureresistente EHEC-Stamm *E. coli* O157:H7 signifikant auf Lebendzellzahlen unter der jeweiligen Erreger-spezifischen kritischen Infektionsdosis bzw. nicht mehr nachweisbaren Lebendzahlen mittels dem erfindungsgemäßen Verfahren unter Verwendung der erfindungsgemäßen Zusammensetzung in relativ kurzer Zeitspanne dezimiert werden kann. Dementsprechend kann angenommen werden, dass mittels dem erfindungsgemäßen Verfahren unter Verwendung der erfindungsgemäßen Zusammensetzung auch andere Mikroorganismen, insbesondere säureresistente pathogene Mikroorganismen, wie andere Salmonella-Stämme und EHEC-Stämme aber auch Listerien oder Viren, wie Noroviren oder Hepatitis A-Viren vorteilhaft eliminiert bzw. auf niedrige Zahlen unterhalb der jeweiligen Erreger-abhängigen Infektionsdosis dezimiert werden können.

**Tabelle 1: Bestimmung der Lebendkeimzahl der erfindungsgemäßen Teigansätze mit Salmonella typhimurium belasteten oder E. coli O157:H7 (EHEC) belasteten Sprossen / Keimlinge zu verschiedenen Inkubationszeiten. Tag 0 kennzeichnet dabei den Tag frisch nach dem Zubereiten der jeweiligen Test-Ansätze.**

| **Tag** | ***Salmonella typhimurium: Lebendkeimzahl auf XLD-Agar*** | ***E. coli* O157:H7 (EHEC): *Lebendkeimzahl auf SMAC-Agar*** |
|---|---|---|
| 0 | 5,0* 10⁴ KBE/g | 2,5* 10⁵ KBE/g |
| 1 | Ca. 1,0* 10¹ KBE/g | Ca. 5,0* 10² KBE/g |
| 2 | Anreicherung positiv | Ca. 1,0* 10² KBE/g |
| 5 | Anreicherung negativ | Ca. 5,0* 10¹ KBE/g |
| 7 | - | Ca. 1,0* 10¹ KBE/g |
| 13 | - | Anreicherung negativ |

### Beispiel 3

### Die erfindungsgemäße Zusammensetzung (Rezeptur) enthaltend Inulin ermöglicht eine bessere Gleichverteilung von darin vermengten Sprossen / Keimlingen und zudem eine bessere Retention von Wasser als Stand der Technik Rezepturen

In einem weiteren Versuch wurde die oben beschriebene erfindungsgemäße Rezeptur, d.h. Sauerteig 40 %, Inulin 8 %, Sprossen / Keimlinge 52 % angesetzt, gleichverteilt gemischt und anschließend stehengelassen. Die Gleichverteilung der Sprossen in der Zusammensetzung und die Retention von Wasser im Sauerteig-Gemisch wurde über die Zeit visuell beobachtet und ausgewertet. Als Kontrolle diente eine entsprechende "Stand der Technik"-Zusammensetzung ohne Inulin (Kontrolle).

Über die Zeit setzte sich bei dem Kontroll-Ansatz (in Figur 2 mit "Versuch 1" indiziert; linke Fotografiehälfte) eine i.W. wässrige Lösung als Überschicht über das Teiggemisch ab. Nach Ruhen für 4 Tage wuchs diese im Kontroll-Ansatz bereits auf ca. 0,6 cm an (siehe Figur 2). Im scharfen Kontrast hierzu blieb der Ansatz der erfindungsgemäßen Zusammensetzung (in Figur 2 mit "Versuch 2" indiziert; rechte Fotografiehälfte) homogen, d.h. die i.W. wässrige Lösung bleibt retendiert in dem Teig selbst nach einem Ruhen des Teiggemisches für 4 Tage (siehe Figur 2) und 5 Tage (siehe Figur 3).

Neben der Absetzung eines Überstands ist im Kontroll-Ansatz die herabgesetzte Gleichverteilung der Sprossen / Keimlinge im Teig zu erkennen, d.h. das durch die Schwerkraft bedingte Absinken der eingesetzten Sprossen / Keimlinge ist in Form einer zunehmenden Anhäufung der Sprossen / Keimlinge in Richtung des Gefäßbodens zu erkennen (zumindest tendenziell), die im erfindungsgemäßen Ansatz ausblieb. Die Sprossen / Keimlinge blieben ergo in der erfindungsgemäßen Zusammensetzung im scharfen Kontrast zum Kontroll-Ansatz im Teig gleichverteilt. Da im Beispiel 2 ausweislich der Figur 2 der Anteil an Sprossen / Keimlingen bezogen auf die Gesamtzusammensetzung des jeweiligen Ansatz sehr hoch war (52%), fiel der erwähnte bessere Effekt der Gleichverteilung der Sprossen / Keimlinge im Teig gemäß der vorliegenden Erfindung gegenüber dem Kontroll-Ansatz nicht sehr markant aus. Daher wurden nachfolgend weitere Versuche mit verschiedenen geringeren Anteilen an Sprossen / Keimlingen bezogen auf die Gesamtzusammensetzung des Ansatzes auf diesen Effekt hin untersucht. Diese Experimente zeigten den Unterschied in der Verteilung der Sprossen / Keimlinge zwischen Kontroll-Ansatz im Vergleich zum entsprechenden erfindungsgemäßen Ansatz noch deutlicher (nicht gezeigt).

## Patentansprüche

1. Verfahren zur Entkeimung von mit Mikroorganismen, insbesondere mit pathogenen Mikroorganismen belasteten Sprossen / Keimlingen für die Herstellung von Backwaren und/oder deren Vorprodukten, insbesondere Vorteige und/oder Sauerteige unter Verwendung von Wasser und wenigstens eines Getreidemahlproduktes, welches durch Zusatz von Milchsäurebakterien-enthaltenden Impfgutes angesäuert wird und das Impfgut optional zusätzlich Hefe enthält, **dadurch gekennzeichnet, dass** die Entkeimung durch folgende Schritte erhalten wird:
- Mischen eines pastösen Teiges aus Wasser, Getreidemahlprodukt, Impfgut und zumindest eines gelbildenden Hydrokolloides in einem bestimmten Verhältnis;
- Mischen des entstandenen pumpbaren pastösen Teiges mit den Sprossen / Keimlingen, wobei ein Gemisch aus Teig und in diesem kolloidal im Wesentlichen gleichverteilten Sprossen / Keimlingen entsteht;
- Inkubieren des Gemisches aus Teig mit Sprossen / Keimlingen zum Entkeimen der Sprossen / Keimlinge, wobei das Inkubieren insgesamt 1 - 10 Tage und bei einem pH von 3.0 - 4.5 sowie einer Temperatur von 12 - 30°C durchgeführt wird;
- Bereitstellen des Gemisches aus Teig mit entkeimten Sprossen / Keimlingen.

2. Verfahren gemäß Anspruch 1, **dadurch gekennzeichnet, dass**
die Sprossen / Keimlinge aus gemälzter Saat (Saatkörper) und/oder Blattkeimen / Wurzelkeimen aus Saat sind, wobei die gemälzte Saat und/oder Blattkeime / Wurzelkeime nach der Keimung getrennt und getrocknet werden.

3. Verfahren gemäß einem der Ansprüche 1 oder 2, **dadurch gekennzeichnet, dass**
es sich bei den Sorten der Sprossen / Keimlinge um Weizen, Dinkel, Roggen, Gerste, Hafer, Reis, Hirse, Quinoa, Salate, Zwiebel(samen), Kichererbsen, Linsen, Lauch, Anis, Kümmel, Fenchel, Bockshornklee, Mais, Bohnen, Erbsen, Sojabohnen, Luzerne, Radieschen, Rettich, Kresse, Kapuzinerkresse, Chia, Brokkoli, Rucola, Alfa-alfa, Amaranth, Kürbis, Senf, Sesam, Leinsaat, Sonnenblume und Tomaten oder Mischungen aus den vorgenannten handelt.

4. Verfahren gemäß einem der vorstehenden Ansprüche, **dadurch gekennzeichnet, dass**
vor dem Schritt des Mischens der Schritt der Applikation des pastösen pumpbaren Teigs durch Besprühen auf die Sprossen / Keimlinge vorgesehen ist.

5. Verfahren gemäß einem der vorstehenden Ansprüche, **dadurch gekennzeichnet, dass**
das zumindest eine gelbildende Hydrokolloid ausgewählt ist aus der Gruppe aus Xanthan, Alginat, Carrageen, Hydroxypropylmethylcellulose, Inulin und hochverestertes Pektin oder Mischungen von den vorgenannten.

6. Verfahren gemäß Anspruch 5, **dadurch gekennzeichnet, dass**
das bestimmte zumindest eine gelbildende Hydrokolloid ausgewählt ist aus der Gruppe von Xanthan, Alginat, Carrageen, Hydroxypropylmethylcellulose und hochverestertes Pektin oder Mischungen von den vorgenannten und wobei das gelbildende Hydrokolloid in dem bestimmten Verhältnis von ca. 0,2 - ca. 5 % bezogen auf die Gesamtmasse des pastösen Teiges eingesetzt wird.

7. Verfahren gemäß Anspruch 5, **dadurch gekennzeichnet, dass**
das bestimmte zumindest eine gelbildende Hydrokolloid Inulin ist und wobei das bestimmte Verhältnis von Inulin zur Gesamtmasse des pastösen Teiges ca. 2 - ca. 12 % ist.

8. Verfahren gemäß einem der vorstehenden Ansprüche, **dadurch gekennzeichnet, dass**
der für die Entkeimung, der mit Mikroorganismen belasteten Sprossen / Keimlingen, notwendige pH-Wert des Gemisches ohne Hinzufügen von zusätzlichen Ansäuerungsmitteln, wie Milchsäure, Essigsäure, Zitronensäure oder anderen organischen oder mineralischen Säuren ausgeführt wird.

9. Verfahren gemäß einem der vorstehenden Ansprüche, **dadurch gekennzeichnet, dass**
das Impfgut eine adaptierte Mischflora aus wenigstens einem Stamm homo- und/oder heterofermentativer Milchsäurebakterien enthält, wobei der Stamm homo- und heterofermentativer Milchsäurebakterien ausgewählt ist aus den Stämmen *L. acidifarinae, L. acidophilus, L. alimentarius, L. amylovorus, L. brevis, L. buchneri, L. cellobiosus, L. coleohominis, L. collinoides, L. crispatus, L. crustorum, L. curvatus, L. delbrueckki, L. diolivorans, L. farciminis, L. fermentum, L. fructivorans, L. frumenti, L. gallinarum, L. gasseri, L. hammesii, L. helveticus, L. hilgardii, L. homohiocchi, L. johnsonii, L. kefiri, L. kimchi, L. kunkeei, L. linderi, L. mali, L. mindensis, L. mucosae, L. nagelii, L. nantensis, L. namurensis, L. nodensis, L. oris, L. panis, L. paralimentarius, L. parabuchneri, L. paracasei, L. pentosus, L. perolens, L. plantarum, L. pontis, L. reuteri, L. rossiae, L. sakei, L. sanfranciscensis, L. secaliphilus, L. siliginis, L. spicheri, L. vaginalis, L. zymae, u.a. Lactococcus lactis, Leuconostoc citreum, Lc. argentinum , Lc. suntoryeus, L. gelidum, Lc. mesenteroides, Pediococcus acidilactici, P. damnosus, P. parvulus, P. pentosaceus, Weissella cibaria, Weissella confusa, Weissella kandleri, Weissella paramesenteroides, Weissella viridescens* und Mischungen derselben und optional wenigstens ein Hefestamm enthalten ist ausgewählt aus den Stämmen *Candida milleri (Kazachstania milleri), Candida humilis, Kazachstania exigua, Saccharomyces cerevisiae, Debaryomyces hansenii, Dekkera bruxellensis, Kazachstania unispora, Kluyveromyces lactis, S. bayanus, Saccharomyces pastorianus, Torulaspora delbrueckii, T. pretoriensis, Wickerhamomyces anomalus, Pichia anomala, Hansenula anomala, Pichia kudriavzevii, Issatschenkia orientalis, Candida krusei* und Mischungen derselben.

10. Verfahren gemäß einem der vorstehenden Ansprüche, **dadurch gekennzeichnet, dass**
nach dem Schritt des Bereitstellens des Gemisches aus Teig mit entkeimten Sprossen / Keimlingen der Schritt des Weiterverarbeitens des Gemisches aus Teig mit entkeimten Sprossen / Keimlingen vorgesehen ist.

11. Verfahren gemäß einem der Ansprüche 1 bis 10, **dadurch gekennzeichnet, dass**
nach dem Schritt des Bereitstellens des Gemisches aus Teig mit entkeimten Sprossen / Keimlingen der Schritt des Isolierens der entkeimten Sprossen / Keimlinge vorgesehen ist.

12. Verwendung eines Gemisches aus Teig mit entkeimten Sprossen / Keimlingen hergestellt nach dem Verfahren gemäß einem der Ansprüche 1 bis 11 zum Herstellen von Backwaren.

## Claims

1. A method for sterilizing sprouts/seedlings contaminated with microorganisms, especially pathogenic microorganisms, for the production of baked goods and/or their precursors, especially pre-doughs and/or sourdoughs, using water and at least one grain mill product, which is acidified by adding inoculum containing lactic acid bacteria, the inoculum optionally also containing yeast, **characterized in that** sterilization is achieved by the following steps:
- mixing a paste-like dough from water, grain mill product, inoculum and at least one gel-forming hydrocolloid in a specific ratio;
- mixing the resulting pumpable paste-like dough with the sprouts/seedlings, thereby producing a mixture of dough and sprouts/seedlings distributed essentially uniformly in a colloidal form;
- incubating the mixture of dough and sprouts/seedlings to sterilize the sprouts/seedlings, the incubation being carried out for a total of 1-10 days and at a pH of 3.0-4.5 and a temperature of 12-30°C;
- providing the mixture of dough with sterilized sprouts/seedlings.

2. The method of claim 1, **characterized in that**
the sprouts/seedlings are from malted seeds (seed bodies) and/or plumules/radicles from seeds, wherein the malted seeds and/or plumules/radicles are separated and dried after germination.

3. The method of one of claims 1 or 2, **characterized in that**
the varieties of sprouts/seedlings are wheat, spelt, rye, barley, oats, rice, millet, quinoa, lettuce, onion (seeds), chickpeas, lentils, leeks, aniseed, caraway, fennel, fenugreek, corn, beans, peas, soybeans, alfalfa, radishes, cress, nasturtium, chia, broccoli, arugula, alfalfa, amaranth, pumpkin, mustard, sesame, linseed, sunflower, and tomatoes, or mixtures thereof.

4. The method of any preceding claim, **characterized in that**
prior to the mixing step, there is a step of applying the paste-like, pumpable dough by spraying onto the sprouts/seedlings.

5. The method of any preceding claim, **characterized in that**
the at least one gel-forming hydrocolloid is selected from the group consisting of xanthan, alginate, carrageenan, hydroxypropyl methylcellulose, inulin, and highly esterified pectin, or mixtures thereof.

6. The method of claim 5, **characterized in that**
the specific at least one gel-forming hydrocolloid is selected from the group consisting of xanthan, alginate, carrageenan, hydroxypropyl methylcellulose, and highly esterified pectin or mixtures thereof, and wherein the gel-forming hydrocolloid is used in the specific ratio of approximately 0.2 to approximately 5% based on the total mass of the paste-like dough.

7. The method of claim 5, **characterized in that**
the specific at least one gel-forming hydrocolloid is inulin, and wherein the specific ratio of inulin to the total mass of paste-like dough is approximately 2 to approximately 12%.

8. The method of any preceding claim, **characterized in that**
the pH value of the mixture required for the sterilization of the sprouts/seedlings contaminated with microorganisms is achieved without the addition of additional acidifying agents such as lactic acid, acetic acid, citric acid, or other organic or mineral acids.

9. The method of any preceding claim, **characterized in that**
the inoculum contains an adapted mixed flora of at least one strain of homofermentative and/or heterofermentative lactic acid bacteria, wherein the strain of homofermentative and heterofermentative lactic acid bacteria is selected from the strains *L. acidifarinae, L. acidophilus, L. alimentarius, L. amylovorus, L. brevis, L. buchneri, L. cellobiosus, L. coleohominis, L. collinoides, L. crispatus, L. crustorum, L. curvatus, L. delbrueckki, L. diolivorans, L. farciminis, L. fermentum, L. fructivorans, L. frumenti, L. gallinarum, L. gasseri, L. hammesii, L. helveticus, L. hilgardii, L. homohiocchi, L.johnsonii, L. kefiri, L. kimchi, L. kunkeei, L. linderi, L. mali, L. mindensis, L. mucosae, L. ncigelii, L. nantensis, L. namurensis, L. nodensis, L. oris, L. panis, L. porolimentorius, L. parabuchneri, L. porocosei, L. pentosus, L. perolens, L. plantarum, L. pontis, L. reuteri, L. rossiae, L. sakei, L. sanfranciscensis, L. secaliphilus, L. siliginis, L. spicheri, L. vaginalis, L. zymae, including, among others, Lactococcus lactis, Leuconostoc citreum, Lc. argentinum, Lc. suntoryeus, L. gelidum, Lc. mesenteroides, Pediococcus acidilactici, P. damnosus, P. parvulus, P. pentosaceus, Weissella cibaria, Weissella confusa, Weissella kandleri, Weissella paramesenteroides, Weissella viridescens,* and mixtures thereof, and optionally there is at least one yeast strain included selected from the strains *Candida milleri (Kazachstania milleri), Candida humilis, Kazachstania exigua, Saccharomyces cerevisiae, Debaryomyces hansenii, Dekkera bruxellensis, Kazachstania unispora, Kluyveromyces lactis, S. bayanus, Saccharomyces pastorianus, Torulaspora delbrueckii, T. pretoriensis, Wickerhamomyces anomalus, Pichia anomala, Hansenula anomala, Pichia kudriavzevii, Issatschenkia orientalis, Candida krusei,* and mixtures thereof.

10. The method of any preceding claim, **characterized in that**
after the step of providing the mixture of dough with sterilized sprouts/germs, there is a step of further processing the mixture of dough with sterilized sprouts/germs.

11. The method of one of claims 1 to 10, **characterized in that**
after the step of providing the mixture of dough with sterilized sprouts/seedlings, there is a step of isolating the sterilized sprouts/seedlings.

12. The use of a mixture of dough with sterilized sprouts/seedlings produced according to the method of any of claims 1 to 11 for producing baked goods.

## Revendications

1. Procédé de stérilisation de germes / pousses contaminés par des micro-organismes, en particulier des micro-organismes pathogènes germes destinés à la fabrication de produits de boulangerie et/ou de leurs produits préliminaires, en particulier de pré-pâtes et/ou de levains, en utilisant de l'eau et au moins un produit de mouture de céréales, qui est acidifié par l'ajout d'un inoculum contenant des bactéries lactiques, l'inoculum contenant en outre éventuellement de la levure, **caractérisé en ce que** la stérilisation est obtenue par les étapes suivantes :
mélange d'une pâte pâteuse composée d'eau, de produit céréalier moulu, de culture et d'au moins un hydrocolloïde gélifiant dans un rapport déterminé ;
mélange de la pâte pâteuse pompable obtenue avec les pousses / germes, ce qui donne un mélange de pâte et de pousses / germes répartis de manière essentiellement homogène dans celle-ci ;
incubation du mélange de pâte et de pousses/germes pour stériliser les pousses/germes, l'incubation étant effectuée pendant 1 à 10 jours au total, à un pH de 3,0 à 4,5 et à une température de 12 à 30 °C ;
Préparation du mélange de pâte avec les germes / pousses germés.

2. Procédé selon la revendication 1, **caractérisé en ce que**
les pousses / germes sont issus de graines maltées (corps de graines) et/ou de germes foliaires / racinaires issus de graines, les graines maltées et/ou les germes foliaires / racinaires étant séparés et séchés après la germination.

3. Procédé selon l'une des revendications 1 ou 2, **caractérisé en ce que**
les variétés de pousses / germes sont le blé, l'épeautre, le seigle, l'orge, l'avoine, le riz, le millet, le quinoa, les salades, les oignons (graines), les pois chiches, les lentilles, les poireaux, anis, cumin, fenouil, fenugrec, maïs, haricots, pois, soja, luzerne, radis, cresson, capucine, chia, brocoli, roquette, alfa-alfa, amarante, courge, moutarde, sésame, graines de lin, tournesol et tomates ou des mélanges de ceux-ci.

4. Procédé selon l'une des revendications précédentes, **caractérisé en ce que**
avant l'étape de mélange, l'étape d'application de la pâte pompable pâteuse par pulvérisation sur les pousses / germes est prévue.

5. Procédé selon l'une des revendications précédentes, **caractérisé en ce que**
le ou les hydrocolloïdes gélifiants sont choisis parmi le groupe comprenant le xanthane, l'alginate, la carraghénine, l'hydroxypropylméthylcellulose, l'inuline et la pectine hautement estérifiée ou des mélanges des éléments précités.

6. Procédé selon la revendication 5, **caractérisé en ce que**
le ou les hydrocolloïdes gélifiants sont choisis dans le groupe constitué par le xanthane, l'alginate, la carraghénine, l'hydroxypropylméthylcellulose et la pectine hautement estérifiée ou des mélanges de ceux-ci, et l'hydrocolloïde gélifiant est utilisé dans le rapport déterminé d'environ 0,2 à environ 5 % par rapport à la masse totale de la pâte.

7. Procédé selon la revendication 5, **caractérisé en ce que**
l'au moins un hydrocolloïde gélifiant déterminé est l'inuline et le rapport déterminé de l'inuline à la masse totale de la pâte pâteuse est d'environ 2 à environ 12 %.

8. Procédé selon l'une des revendications précédentes, **caractérisé en ce que**
le pH du mélange nécessaire à la stérilisation des pousses / germes contaminés par des micro-organismes est obtenu sans ajout d'agents acidifiants supplémentaires tels que l'acide lactique, l'acide acétique, l'acide citrique ou d'autres acides organiques ou minéraux.

9. Procédé selon l'une des revendications précédentes, **caractérisé en ce que**
le produit d'inoculation contient une flore mixte adaptée composée d'au moins une souche de bactéries lactiques homo- et/ou hétérofermentaires, la souche de bactéries lactiques homo- et hétérofermentaires étant choisie parmi les souches *L. acidifarinae, L. acidophilus, L. alimentarius, L. omylovorus, L. brevis, L. buchneri, L. cellobiosus, L. coleohominis, L. collinoides, L. crispatus, L. crustorum, L. curvatus, L. delbrueckki, L. diolivorans, L. farciminis, L. fermentum, L. fructivorans, L. frumenti, L. gallinarum, L. gasseri, L. hammesii, L. helveticus, L. hilgardii, L. homohiocchi, L.johnsonii, L. kefiri, L. kimchi, L. kunkeei, L. linderi, L. mali, L. mindensis, L. mucosae, L. ncigelii, L. nantensis, L. namurensis, L. nodensis, L. oris, L. panis, L. porolimentorius, L. parabuchneri, L. porocosei, L. pentosus, L. perolens, L. plantarum, L. pontis, L. reuteri, L. rossiae, L. sakei, L. sanfranciscensis, L. secaliphilus, L. siliginis, L. spicheri, L. vaginalis, L. zymae,* entre autres *Lactococcus lactis, Leuconostoc citreum, Lc. argentinum, Lc. suntoryeus, L. gelidum, Lc. mesenteroides, Pediococcus acidilactici, P. damnosus, P. parvulus, P. pentosaceus, Weissella cibaria, Weissella confusa, Weissella kandleri, Weissella paramesenteroides, Weissella viridescens* et des mélanges de celles-ci, et éventuellement au moins une souche de levure choisie parmi les souches *Candida milleri (Kazachstania milleri), Candida humilis, Kazachstania exigua, Saccharomyces cerevisiae, Debaryomyces hansenii, Dekkera bruxellensis, Kazachstania unispora, Kluyveromyces lactis, S. bayanus, Saccharomyces pastorianus, Torulaspora delbrueckii, T. pretoriensis, Wickerhamomyces anomalus, Pichia anomala, Hansenula anomala, Pichia kudriavzevii, Issatschenkia orientalis, Candida krusei* et des mélanges de celles-ci.

10. Procédé selon l'une des revendications précédentes, **caractérisé en ce que**
après l'étape de préparation du mélange de pâte avec des germes / pousses stérilisés, l'étape de transformation du mélange de pâte avec des germes / pousses stérilisés est prévue.

11. Procédé selon l'une des revendications 1 à 10, **caractérisé en ce que**
après l'étape de préparation du mélange de pâte avec des germes / pousses stérilisés, l'étape d'isolation des germes / pousses stérilisés est prévue.

12. Utilisation d'un mélange de pâte avec des pousses / germes stérilisés, préparé selon le procédé selon l'une des revendications 1 à 11, pour la fabrication de produits de boulangerie.
